# EUROPÄISCHE PATENTSCHRIFT

(11) **EP 3 841 732 B1**
(45) Veröffentlichungstag und Bekanntmachung des Hinweises auf die Patenterteilung: **28.08.2024**
(21) Anmeldenummer: 19795094.2
(22) Anmeldetag: 15.10.2019
(51) Int. Cl.: H04L 67/12

(54) **VERFAHREN, COMPUTERSYSTEM UND COMPUTERPROGRAMM ZUR AUTOMATISCHEN VERARBEITUNG VON DATENBEZEICHNERN**
METHOD, COMPUTER SYSTEM AND A COMPUTER PROGRAM FOR AUTOMATICALLY PROCESSING DATA LABELS
PROCÉDÉ, SYSTÈME INFORMATIQUE ET PROGRAMME INFORMATIQUE DESTINÉ AU TRAITEMENT AUTOMATIQUE DES IDENTIFICATEURS DE DONNÉES

(30) Priorität: 18.10.2018 EP 18201269
(43) Veröffentlichungstag der Anmeldung: 30.06.2021
(73) Patentinhaber: Siemens Aktiengesellschaft, 80333 München (DE)
(72) Erfinder: POTT, Philipp, 91077 Neunkirchen am Brand (DE); MOGRE, Parag, 80807 München (DE)
(74) Vertreter: Siemens Patent Attorneys
(86) Internationale Anmeldenummer: PCT/EP2019/077838
(87) Internationale Veröffentlichungsnummer: WO 2020/078940

(56) Entgegenhaltungen:
- EP-A2- 2 660 667
- US-A1- 2011 055 121
- US-A1- 2012 038 462

## Beschreibung

Die Erfindung betrifft ein Verfahren zur automatischen Verarbeitung von Datenbezeichnern. Datenbezeichner sind insbesondere Variablennamen, Namen von beim Anlegen einer Variablen instanziierten Datentypen sowie Namen von zusammengesetzten Datentypen. Die Erfindung betrifft auch ein zur Ausführung eines Verfahrens zur automatischen Verarbeitung von Datenbezeichnern bestimmtes Computersystem sowie ein Computerprogramm mit einer Implementation eines solchen Verfahrens.

Mittels moderner Automatisierungstechniken und vor allem mittels der im Rahmen des Internets der Dinge (IoT) gegebenen Möglichkeiten zur Datenerfassung ergeben sich erhebliche Datenmengen. Deren Auswertung kann aus unterschiedlichsten Gründen interessant und wünschenswert sein. Beispielsweise können bei an eine sogenannte Cloud-Plattform - im Folgenden als IoT-Plattform bezeichnet - übermittelten Daten verschiedene, aber gleichartige Anlagen gegenübergestellt werden, um zum Beispiel deren Leistung zu vergleichen oder Ausfälle der Anlagen vorherzusagen. Die Möglichkeiten zur Auswertung solcher Daten, vor allem die Möglichkeiten zur automatischen Auswertung, sind aber mitunter begrenzt.

Als (nicht einschränkendes) Beispiel für gleichartige Anlagen mögen Windkraftanlagen oder zu Windparks zusammengefasste Windkraftanlagen dienen. Jede Windkraftanlage kann Leistungsdaten an eine Cloud-Plattform übermitteln. Wenn deren Übermittlung mittels jeweils gleicher Datenbezeichner - zum Beispiel "Performance" - erfolgt, kann auf Seiten der Cloud-Plattform automatisch eine Zuordnung der Leistungsdaten zueinander und zum Beispiel eine über einer Zeitachse aufgetragene Darstellung der Leistungsdaten der einzelnen Windkraftanlagen erfolgen. Auf diese Weise ist ein schneller Vergleich der Leistung der einzelnen Windkraftanlagen möglich.

Problematisch ist allerdings, wenn unterschiedliche Datenbezeichner für gleiche oder gleichartige Daten verwendet werden, also zum Beispiel für die oben erwähnten Leistungsdaten. Dann ist eine automatische Zuordnung nicht möglich und vielmehr ein Eingriff eines menschlichen Experten erforderlich. Einfache Beispiele für in dem erwähnten Szenario denkbare Datenbezeichner sind Bezeichnungen wie "Leistung" und "Performance". Damit bezeichnete Daten sind nicht ohne Weiteres automatisch als gleich oder gleichartig - im Folgenden zusammenfassend als "zusammengehörig" bezeichnet - erkennbar. Der notwendige Eingriff eines menschlichen Experten ist allerdings aufwendig und fehleranfällig. Dabei ist zu berücksichtigen, dass bei in eine Cloud-Plattform übermittelten Daten üblicherweise nicht nur eine einzelne Datenart, wie zum Beispiel Leistungsdaten, übermittelt wird, sondern eine Vielzahl unterschiedlicher Daten, wie sie mittels einer von einer jeweiligen Anlage umfassten Sensorik unmittelbar oder mittelbar erfassbar sind. Die schiere Menge übermittelter Daten führt bei einer Notwendigkeit einer manuellen Zuordnung zu dem erwähnten erheblichen, vor allem zeitlichen Aufwand. Vor dem Hintergrund der benötigten Zeit ist auch mit einer nicht unerheblichen Fehleranfälligkeit bei der Auswertung durch einen menschlichen Experten zu rechnen.

Der skizzierte Aufwand und die Fehleranfälligkeit führen dazu, dass gar keine Zuordnung gemacht wird und die fehlende Zuordnung lässt grundsätzlich gegebene Möglichkeiten der Auswertung von an eine Cloud-Plattform übermittelten Daten brach liegen und steht zum Beispiel einer Erkennung von Optimierungsmöglichkeiten, Fehlern oder sich anbahnenden Fehlersituationen und dergleichen entgegen.

Aus US 2011/0055121 A1 ist ein Verfahren zur Identifizierung eines beobachteten Phänomens bekannt, wobei das Verfahren folgende Verfahrensschritte umfasst: Empfangen unterschiedlicher Datenströme, denen unterschiedlichen Datenquellen zugeordnet sind; Erzeugen eines Satzes von Attributen für jeden Datenstrom; weiche Zuordnung von Etiketten zu Attributen für jeden Satz von Attributen, wodurch ein Konfidenzwert für jede weiche Zuordnung erzeugt wird; Standardisierung der Konfidenzwerte; und Erzeugen einer Ausgabe, die das Phänomen anzeigt, basierend auf den standardisierten Konfidenzwerten.

Eine Aufgabe der vorliegenden Erfindung besteht entsprechend darin, ein Verfahren zur automatischen Verarbeitung von Datenbezeichnern anzugeben, welches eine Erkennung zusammengehöriger Datenbezeichner und/oder zusammengehöriger und mit jeweils zumindest einem Datenbezeichner assoziierter Daten ermöglicht.

Als mit einem Datenbezeichner assoziierte Daten werden dabei mit einem Variablennamen (Datenbezeichner) unmittelbar bezeichnete Daten, aber auch mittelbar in diesem Sinne bezeichnete Daten verstanden. Eine mittelbare Bezeichnung liegt zum Beispiel vor, wenn für die jeweilige Variable ein charakteristischer Datentyp verwendet wird und zum Beispiel der Name des Datentyps zur Erkennung einer eventuellen Zusammengehörigkeit ausgewertet werden kann. Eine solche mittelbare Bezeichnung liegt zum Beispiel auch entlang einer Hierarchie zusammengesetzter Datentypen vor. In diesem Zusammenhang sind vor allem die bei der Übermittlung von Daten an eine Cloud-Plattform verwendeten Datentypen "Asset" und "Aspect" sowie im Rahmen eines Datenmodells einer IoT-Plattform - im Folgenden als IoT-Modell bezeichnet - verwendete Bezeichner und IoT-Geräteinformationen zu nennen.

Die oben genannte Aufgabe wird erfindungsgemäß mittels eines Verfahrens zur automatischen Verarbeitung von Datenbezeichnern mit den Merkmalen des Anspruchs 1 gelöst. Im Rahmen des Verfahrens ist Folgendes vorgesehen: Mit Datenbezeichnern versehene oder mit Datenbezeichnern im oben skizzierten Sinne assoziierte Daten werden an eine Cloud-Plattform übermittelt. Im Bereich der Cloud-Plattform erfolgt eine zumindest temporäre Verarbeitung der Daten und/oder der Datenbezeichner mittels einer Analyseeinheit. Die Funktion der Analyseeinheit ist bevorzugt in Software implementiert. Die Analyseeinheit umfasst zumindest eine Funktionseinheit. Die oder jede Funktionseinheit nimmt eine Analyse der an die Cloud-Plattform übermittelten Daten und/oder assoziierten Datenbezeichner vor. In Abhängigkeit von einem Ergebnis der Analyse ermittelt die jeweilige Funktionseinheit einen Konfidenzwert. Die oder jede Funktionseinheit empfängt also die Daten und/oder assoziierte Datenbezeichner als Eingangswerte und der als Ergebnis der Analyse ermittelte Konfidenzwert ist ein Ausgangswert der jeweiligen Funktionseinheit. Der oder jeder Konfidenzwert wird auf einen Gesamtkonfidenzwert abgebildet. Bei nur einer Funktionseinheit und entsprechend nur einem resultierenden Konfidenzwert ist dieser der Gesamtkonfidenzwert. Bei mehreren Funktionseinheiten ergibt sich der Gesamtkonfidenzwert durch eine Zusammenfassung der Konfidenzwerte der einzelnen Funktionseinheiten, insbesondere eine numerische oder logische Zusammenfassung, zum Beispiel durch Bildung des Mittelwerts der Konfidenzwerte der einzelnen Funktionseinheiten (numerische Zusammenfassung). Der Gesamtkonfidenzwert kodiert eine Zusammengehörigkeit zweier Datenbezeichner, zum Beispiel mit einem Zahlenwert in einem Wertebereich von "0,0" bis "1,0", wobei "1,0" eine automatisch festgestellte absolute Zusammengehörigkeit kodiert. Als zusammengehörig oder als ausreichend zusammengehörig ermittelte Datenbezeichner werden unter einem übergeordneten Variablennamen zusammengefasst oder ein Datenbezeichner wird zu einer bereits bestehenden Zusammenfassung hinzugefügt. Der übergeordnete Variablenname ist als Schlüsselwort für eine Datenbankabfrage verwendbar, welche im Ergebnis Daten zu allen unter dem übergeordneten Variablennamen zusammengefassten Datenbezeichnern liefert. Dabei sind Datenbezeichner mit einem Gesamtkonfidenzwert oberhalb eines vorgegebenen oder vorgebbaren Schwellwerts zusammengehörig.

Übertragen auf das eingangs gewählte Beispiel mit Leistungsdaten, die zum Beispiel mit Datenbezeichnern wie "Leistung" und "Performance" assoziiert sind, bedeutet dies, dass mittels zumindest einer Funktionseinheit die Zusammengehörigkeit der Leistungsdaten und/oder der Datenbezeichner ermittelt wird, dass diese Zusammengehörigkeit durch zumindest einen Konfidenzwert und einen resultierenden Gesamtkonfidenzwert ausgedrückt wird, dass die Datenbezeichner unter einem übergeordneten Variablennamen, zum Beispiel "Leistung" oder "Anlagenleistung", zusammengefasst werden und dass bei einer Datenbankabfrage mit diesem übergeordneten Variablennamen Daten zu allen unter dem übergeordneten Variablennamen zusammengefassten Datenbezeichnern verfügbar sind. Eine Datenbankabfrage mit zum Beispiel "Anlagenleistung" liefert demnach also die mit dem Datenbezeichner "Leistung" und ebenso die mit dem Datenbezeichner "Performance" assoziierten Daten. Wenn unterschiedliche, aber gleichartige oder zumindest im Wesentlichen gleichartige Anlagen ihre Leistungsdaten mit solchen Datenbezeichnern liefern (an die Cloud-Plattform übermitteln), wird mit dem hier vorgeschlagenen Ansatz deren Zusammengehörigkeit automatisch erkannt und die automatisch erkannte Zusammengehörigkeit kann zum Beispiel für eine Datenbankabfrage verwendet werden. Diese kann wiederum für eine automatische Erstellung einer kombinierten Übersicht über die Anlagenleistungen der jeweiligen Anlagen verwendet werden.

Der Vorteil der Erfindung besteht vor allem darin, dass die beschriebene Zusammengehörigkeit automatisch oder zumindest zum Teil automatisch erkannt werden kann. Wenn eine vollständig automatische Erkennung nicht möglich ist, zum Beispiel weil ein Gesamtkonfidenzwert resultiert, der für eine sichere automatische Erkennung nicht ausreicht, können die betrachteten Daten und/oder assoziierten Datenbezeichner in einer für einen menschlichen Experten leicht erfassbaren Art und Weise zum Beispiel im Wege einer Ausgabe an einem Bildschirm gegenübergestellt werden. Der Experte kann dann die endgültige Entscheidung hinsichtlich der Zusammengehörigkeit treffen und die Zusammengehörigkeit entweder bestätigen oder verneinen. Auch im Falle einer solchen erst durch einen Eingriff eines menschlichen Experten bestätigten Zusammengehörigkeit werden die jeweiligen Datenbezeichner unter einem übergeordneten Variablennamen zusammengefasst oder ein Datenbezeichner wird zu einer bereits bestehenden Zusammenfassung hinzugefügt.

Der Vorteil der Erfindung besteht im Weiteren darin, dass durch die Zusammenfassung unter einem übergeordneten Variablennamen ein zusammenfassender Zugriff auf die als zusammengehörig erkannten Daten möglich ist. Damit ist zum Beispiel eine automatische Erzeugung von Grafiken möglich, welche die als zusammengehörig erkannten Daten verschiedener, aber gleichartiger Anlagen, insbesondere räumlich entfernte Anlagen, in einer gemeinsamen Ansicht und über einer gemeinsamen Zeitachse zeigen.

Es ist vorgesehen, dass Datenbezeichner mit einem Gesamtkonfidenzwert oberhalb eines vorgegebenen oder vorgebbaren Schwellwerts, zum Beispiel "0,9" bei einem Wertebereich von "0,0" bis "1,0", zusammengehörig sind, also automatisch als zusammengehörig identifiziert werden. Entsprechend können Datenbezeichner mit einem Gesamtkonfidenzwert unterhalb eines vorgegebenen oder vorgebbaren Grenzwerts, zum Beispiel "0,5" bei einem Wertebereich von "0,0" bis "1,0", automatisch als nicht zusammengehörig verworfen werden. Bei Datenbezeichnern mit einem Gesamtkonfidenzwert zwischen dem Grenz- und dem Schwellwert wird optional automatisch eine Benutzerabfrage zur eventuellen Bestätigung der Zusammengehörigkeit ausgelöst.

Die oben genannte Aufgabe wird auch mittels einer Vorrichtung zur Durchführung des hier und im Folgenden beschriebenen Verfahrens gelöst. Die Vorrichtung ist ein in der sogenannten Cloud erreichbarer Computer oder ein Computersystem mit einer Cloud-Plattform und einer dort geladenen Analyseeinheit wie hier und im Folgenden beschrieben.

Die Analyseeinheit und die oder jede davon umfasste Funktionseinheit ist zur automatischen Ausführung bevorzugt in Form eines Computerprogramms, ggf. eines verteilten Computerprogramms, realisiert. Die Erfindung ist insoweit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein in der Cloud erreichbarer Computer oder ein Computersystem, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Für die weitere Beschreibung gilt in Bezug auf die unterschiedlichen Aspekte der Erfindung (Verfahren zur automatischen Verarbeitung von Datenbezeichnern; Vorrichtung zur automatischen Verarbeitung von Datenbezeichnern mit einer Implementation des Verfahrens; Computerprogramm mit einer Implementation des Verfahrens) zur Vermeidung unnötiger Wiederholungen, dass Merkmale und Details, die im Zusammenhang mit dem genannten Verfahren zur automatischen Verarbeitung von Datenbezeichnern sowie eventueller Ausgestaltungen beschrieben sind, selbstverständlich auch im Zusammenhang mit und im Hinblick auf die zur Durchführung des Verfahrens eingerichtete Vorrichtung und umgekehrt gelten. Dementsprechend kann das Verfahren auch mittels einzelner oder mehrerer Verfahrensmerkmale fortgebildet sein, die sich auf von der Vorrichtung ausgeführte Verfahrensschritte beziehen, und die Vorrichtung kann entsprechend auch durch Mittel, insbesondere Softwarefunktionseinheiten (Programmcodemittel) zur Ausführung von im Rahmen des Verfahrens ausgeführten Verfahrensschritten fortgebildet sein. Folglich gelten Merkmale und Details, die im Zusammenhang mit dem genannten Verfahren zur automatischen Verarbeitung von Datenbezeichnern und eventueller Ausgestaltungen beschrieben sind, selbstverständlich auch im Zusammenhang mit und im Hinblick auf die zur Durchführung des Verfahrens bestimmte Vorrichtung und jeweils umgekehrt, so dass bezüglich der Offenbarung zu den einzelnen Aspekten der Erfindung stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / der gegenständlichen Vorrichtung nicht vorhanden / nicht gegeben ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer weiteren Ausführungsform des Verfahrens sind verschiedene Funktionen, nämlich Analysefunktionen, der oder jeder Funktionseinheit der Analyseeinheit vorgesehen. Bei einer Analyseeinheit mit genau einer Funktionseinheit kann diese entweder als Sprachanalysefunktionseinheit, als Statistikanalysefunktionseinheit, als Spektralanalysefunktionseinheit, als Korrelationsanalysefunktionseinheit, als Clusteranalysefunktionseinheit oder als Kontextanalysefunktionseinheit fungieren. Die Analyseeinheit kann dann mit genau einer Funktionseinheit realisiert werden, von der erwartet werden kann, dass diese eine eventuelle Zusammengehörigkeit der oben skizzierten Art am besten automatisch erkennen kann.

Bei einer vorteilhaften Ausführungsform des Verfahrens ist vorgesehen, dass die Analyseeinheit zumindest zwei unterschiedliche Funktionseinheiten umfasst. Bei einer Analyseeinheit mit mehr als einer Funktionseinheit kann jede Funktionseinheit eine unterschiedliche Analysefunktion ausführen und die Analyseeinheit umfasst dann verschiedene Funktionseinheiten aus der Gruppe folgender Funktionseinheiten: Sprachanalysefunktionseinheit, Statistikanalysefunktionseinheit, Spektralanalysefunktionseinheit, Korrelationsanalysefunktionseinheit, Clusteranalysefunktionseinheit und Kontextanalysefunktionseinheit. Eine Erkennung einer Zusammengehörigkeit durch zwei oder mehr unterschiedliche Funktionseinheiten ist ein noch stärkeres Indiz für eine tatsächliche Zusammengehörigkeit. Das Analyseergebnis kann also durch eine Verwendung zusätzlicher Funktionseinheiten verbessert werden.

Ein aufgrund der Zusammenfassung mehrerer Konfidenzwerte zu einem Gesamtkonfidenzwert verbesserter Gesamtkonfidenzwert (gegenüber einem nur auf einem Konfidenzwert basierenden Gesamtkonfidenzwert verbessert) wird optional entsprechend markiert (annotiert). Mittels einer solchen Annotierung ist automatisch erkennbar, ob der Gesamtkonfidenzwert auf genau einem Konfidenzwert von genau einer Funktionseinheit oder auf mehreren Konfidenzwerten von zumindest zwei Funktionseinheiten basiert. Als Annotierung kommt zum Beispiel ein dem Gesamtkonfidenzwert zugeordnetes zusätzliches Datum in Betracht. Dieses zusätzliche Datum kann ein binäres Datum sein und kodiert dann, ob dem Gesamtkonfidenzwert genau ein Konfidenzwert oder zumindest zwei Konfidenzwerte zugrunde liegen. Das zusätzliche Datum kann auch ein Datum sein, welches numerisch oder in sonstiger Weise enumerativ die Anzahl der dem Gesamtkonfidenzwert zugrunde liegenden Konfidenzwerte kodiert, zum Beispiel "3", "***" oder dergleichen für genau drei zugrunde liegende Konfidenzwerte.

Bei einer bevorzugten Ausführungsform eines auf einer Verwendung von zumindest zwei unterschiedlichen Funktionseinheiten basierenden Verfahrens zur automatischen Verarbeitung von Datenbezeichnern ist zumindest eine der zumindest zwei Funktionseinheiten aktivierbar oder deaktivierbar. Eine solche Aktivierbarkeit oder Deaktivierbarkeit bedeutet, dass die betreffende Funktionseinheit gleichsam zuschaltbar ist. Durch eine Aktivierbarkeit oder Deaktivierbarkeit einzelner Funktionseinheiten kann die Analysefunktionalität der Analyseeinheit spezifisch auf die zu verarbeitenden Daten und/oder Datenbezeichner abgestellt werden. Die Qualität des Analyseergebnisses kann dadurch verbessert werden.

Bei einer bevorzugten Ausführungsform eines auf einer Verwendung von zumindest zwei unterschiedlichen Funktionseinheiten, von denen zumindest eine aktivierbar oder deaktivierbar ist, basierenden Verfahrens zur automatischen Verarbeitung von Datenbezeichnern erfolgt die Aktivierung oder Deaktivierung einer Funktionseinheit oder einzelner Funktionseinheiten entsprechend einem vorgegebenen oder vorgebbaren Aktivierungsschema. Ein solches Aktivierungsschema ist vor allem bei einer Implementation der Analyseeinheit mit mehr als zwei einzeln aktivierbaren oder deaktivierbaren Funktionseinheiten sinnvoll. Durch die Verwendung eines solchen Aktivierungsschemas muss nicht jede einzelne Funktionseinheit zur Aktivierung oder Deaktivierung ausgewählt werden. Vielmehr führt die Anwendung eines Aktivierungsschemas zur automatischen Aktivierung einzelner darin codierter Funktionseinheiten und ebenso zu einer automatischen Deaktivierung der nicht benötigten Funktionseinheiten. Solche Aktivierungsschemata können für unterschiedliche Anwendungsfälle angelegt und vorgehalten werden. Je nach Anwendungsfall wird ein Aktivierungsschema ausgewählt. Die Auswahl erfolgt regelmäßig durch einen menschlichen Experten, wobei auch eine automatische Auswahl denkbar ist, zum Beispiel eine Auswahl, die sich an einem zuerst analysierten Datenbezeichner und/oder damit assoziierten Daten orientiert.

Bei einer Mehrzahl von einzeln aktivierbaren oder deaktivierbaren Funktionseinheiten ist bei einer vorteilhaften Ausführungsform des Verfahrens vorgesehen, dass das Aktivierungsschema auch eine Aktivierungsreihenfolge und/oder einen Aktivierungszeitpunkt für die oder jede zu aktivierende Funktionseinheit kodiert. Dies erlaubt eine gezielte Steuerung des Ressourcenbedarfs (insbesondere Rechenleistung und/oder Speicherkapazität) der Analyseeinheit und der davon umfassten Funktionseinheiten. Zum Beispiel kann vorgesehen sein, dass zunächst, zum Beispiel während einer on-line-Verarbeitung, nur genau eine Funktionseinheit aktiv ist oder nur wenige Funktionseinheiten aktiv sind, um ein erstes Ergebnis bezüglich einer eventuellen Zusammengehörigkeit zu erhalten. Später, zum Beispiel während einer off-line-Verarbeitung, können weitere oder andere Funktionseinheiten aktiviert werden, um das Ergebnis gegebenenfalls zu bestätigen oder auch zu verwerfen.

Bei einer Mehrzahl von Funktionseinheiten, insbesondere einer Mehrzahl einzeln aktivierbarer oder deaktivierbarer Funktionseinheiten, ist bei einer vorteilhaften Ausführungsform des Verfahrens vorgesehen, dass der Konfidenzwert jeder Funktionseinheit bzw. jeder aktivierten Funktionseinheit entsprechend einem vorgegebenen oder vorgebbaren Abbildungsschema auf den Gesamtkonfidenzwert abgebildet wird. Dies schafft den Vorteil, dass der Gesamtkonfidenzwert spezifisch im Hinblick auf die jeweiligen Funktionseinheiten bzw. aktivierten Funktionseinheiten gebildet werden kann. Unterschiedliche Funktionseinheiten oder unterschiedliche aktivierte Funktionseinheiten, insbesondere eine unterschiedliche Relevanz der davon jeweils erhältlichen Konfidenzwerte, können damit durch entsprechende Abbildungsschemata berücksichtigt werden, zum Beispiel Abbildungsschemata mit unterschiedlichen Gewichtsfaktoren für die einzelnen Konfidenzwerte.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen, deren Schutzumfang durch die nachfolgenden Ansprüche definiert wird. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: mehrere Anlagen, welche Daten an eine Cloud-Plattform übermitteln,
- FIG 2: eine bei der Übermittlung von Daten an die Cloud-Plattform verwendete Datenstruktur mit einem Datenbezeichner in Form eines Variablennamens,
- FIG 3: eine von der Cloud-Plattform umfasste und zur Verarbeitung und Analyse der eingehenden Daten bestimmte Analyseeinheit,
- FIG 4: die Analyseeinheit aus FIG 3 mit weiteren Einzelheiten, nämlich von der Analyseeinheit umfassten Funktionseinheiten sowie einem optionalen Aktivierungsschema zur spezifischen Aktivierung und Deaktivierung einzelner Funktionseinheiten,
- FIG 5: eine tabellarische Darstellung ermittelter Zusammengehörigkeiten zwischen eingehenden Daten und/oder Datenbezeichnern sowie
- FIG 6: eine zu der Darstellung in FIG 5 alternative Darstellung ermittelter Zusammengehörigkeiten.

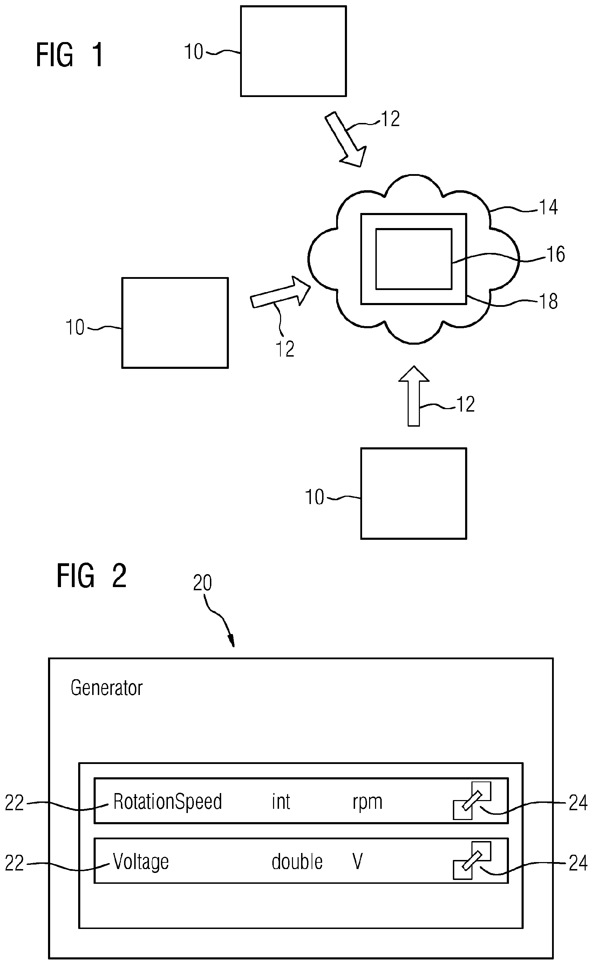

Die Darstellung in FIG 1 zeigt - schematisch stark vereinfacht - verschiedene automatisierte oder zumindest teilautomatisierte technische Anlagen 10 oder Einrichtungen (im Folgenden ohne Verzicht auf weitergehende Allgemeingültigkeit zusammenfassend als Anlagen 10 bezeichnet). Bei den dargestellten Anlagen 10 handelt es sich um gleiche oder zumindest im Wesentlichen gleiche Anlagen 10. Beispiele für Anlagen 10 der dargestellten Art sind Pressenstraßen, Bestückungsanlagen, (Gas-)Turbinenanlagen, Windparks oder Windkraftanlagen und so weiter. Die einzelnen Anlagen 10 befinden sich zum Beispiel an unterschiedlichen geographischen Orten. Als Anlagen 10 der oben genannten Art kommen auch "mobile" Anlagen 10 in Betracht, zum Beispiel Schienenverkehrszüge oder Triebeinheiten solcher Schienenverkehrszüge.

Es wird ausdrücklich darauf hingewiesen, dass die genannten Beispiele nicht abschließend sind. Grundsätzlich kommt der hier vorgeschlagene Ansatz für beliebige automatisierte oder zumindest teilautomatisierte technische Anlagen 10 in Betracht.

Für die weitere Beschreibung wird - ohne Verzicht auf eine weitergehende Allgemeingültigkeit - davon ausgegangen, dass jede der in FIG 1 gezeigten Anlagen 10 einen Windpark mit jeweils zumindest einer Windkraftanlage darstellt.

Zum Zwecke einer zentralen Überwachung mehrerer Anlagen 10 der vorgenannten Art oder auch zum Zwecke einer zentralen Erfassung von Daten von Anlagen 10 der vorgenannten Art ist es heute üblich, dass eine jede derartige Anlage 10 in grundsätzlich an sich bekannter Art und Weise Daten, insbesondere Sensordaten 12, an eine in der sogenannten Cloud 14 erreichbare Cloud-Plattform 16, also ein in der Cloud 14 erreichbares, gegebenenfalls verteiltes Computersystem 18, übermittelt.

Die Sensordaten 12 ergeben sich aufgrund von Messwerten oder dergleichen einer grundsätzlich an sich bekannten, nicht gezeigten und im Rahmen der Automatisierung einer jeweiligen Anlage 10 verwendeten Sensorik. Die Sensordaten 12 können auch aus solchen Messwerten abgeleitet sein und sich zum Beispiel in Form von Berechnungsergebnissen oder Verarbeitungsvorgängen im Rahmen der Automatisierung einer jeweiligen Anlage 10 ergeben. Die Sensordaten 12 umfassen zum Beispiel Statusinformationen, Mengeninformationen, statistische Informationen, Signalverläufe und dergleichen. Eine Statusinformation bezieht sich zum Beispiel auf einen Status der jeweiligen Anlage 10 oder eines Anlagenteils oder einen Status der zur Automatisierung der jeweiligen Anlage 10 vorgesehenen Automatisierungshardware oder eines Teils der Automatisierungshardware. Eine Mengeninformation kann sich zum Beispiel auf Verbrauchsmengen oder produzierte Mengen beziehen. Eine Mengeninformation einer Bestückungsanlage kann sich auf verbaute Bauteilmengen oder auch produzierte Einheiten beziehen. Statistische Informationen können zum Beispiel Mengeninformationen der vorgenannten Art umfassen oder solche Mengeninformationen auf bestimmte Zeitabschnitte beziehen. Weitere Beispiele für statistische Informationen sind Informationen bezüglich einer Laufzeit einer Anlage oder eines Anlagenteils oder bezüglich (fehlerbedingter, wartungsbedingter etc.) Stillstandszeiten.

Solche oder ähnliche Sensordaten 12 gelangen zur Cloud-Plattform 16 und werden dort zentral erfasst. Bereits aufgrund von oftmals in kontinuierlicher oder quasi-kontinuierlicher Form eintreffender Sensordaten 12, insbesondere Sensordaten 12 in Form von sogenannten Zeitreihen, entstehen immense Datenmengen. Bei einer Mehrzahl von mittels derselben Cloud-Plattform 16 überwachter Anlagen 10 ergibt sich eine entsprechend der Anlagenzahl erhöhte Datenmenge.

Die Übermittlung solcher Sensordaten 12 an die Cloud-Plattform 16 erfolgt mittels einer Schnittstelle zwischen der jeweiligen Steuerungssoftware einer Anlage 10 und der Cloud-Plattform 16. Eine solche Schnittstellenfunktion ist an sich bekannt. Die von der Anmelderin verwendete Cloud-Plattform 16 ist unter der Bezeichnung "MindSphere" bekannt und umfasst die Schnittstellenfunktion zur Steuerungssoftware.

Die nachfolgende Beschreibung wird am Beispiel von MindSphere und der dort eingeführten Terminologie fortgesetzt. Dies ist allerdings keinesfalls als Einschränkung auszulegen und erfolgt im Wesentlichen im Interesse einer besseren Lesbarkeit der nachfolgenden Beschreibung. Andere IoT-Plattformen und eine dort ggf. verwendete, abweichende Terminologie sind stets mitzulesen. Im Folgenden wird der Begriff MindSphere anstelle des Begriffs Cloud-Plattform 16 und synonym zu dem Begriff Cloud-Plattform 16 verwendet. Entsprechend wird auch für den Begriff MindSphere die zuvor für den Begriff Cloud-Plattform 16 eingeführte Bezugsziffer verwendet. Bei jeder Nennung des Begriffs MindSphere 16 ist der allgemeinere Begriff Cloud-Plattform 16 stets mitzulesen. MindSphere 16 ist im weitesten Sinne eine Datenbank und die Sensordaten 12 oder dergleichen gehen in diese ein. Auf die Datenbank beziehen sich auch die mittels des hier vorgeschlagenen Ansatzes möglich werdenden Abfragen.

Die Datenerfassung und Datenbereitstellung mit MindSphere 16 beruht auf sogenannten Assets und Aspects. Ein Asset kann ein beliebiges Element einer Anlage 10 oder eine komplette Anlage 10 sein oder bezeichnen, zum Beispiel eine Pumpe, ein Motor, eine SPS, eine komplette Werkzeugmaschine, eine Produktionslinie, ein Roboter, ein Kran, ein Fahrzeug, eine Windkraftanlage usw., um nur einige Beispiele zu nennen. Zu einem solchen (physikalischen) Asset kann ein virtuelles Asset in MindSphere 16 gehören. Zu einem physikalischen Asset gehören Datenpunkte, zum Beispiel indem einer Pumpe mehrere, jeweils Sensordaten 12 liefernde Sensoren zugeordnet sind. Zur Überwachung einer Anlage 10 mittels MindSphere 16 sind die Datenpunkte zumindest einzelner physikalischer Assets als Datenquellen definiert und die Datenquellen eines physikalischen Assets werden einem Asset (virtuelles Asset) in MindSphere 16 zugeordnet.

Auf der Ebene der jeweiligen Anlage 10 liegen Sensordaten 12 und dergleichen in Form von aktuellen Werten verschiedenster Variablen vor, welche in grundsätzlich an sich bekannter Art und Weise in einer zur Automatisierung der Anlage 10 bestimmten Steuerungssoftware angelegt sind. Dies sind die Datenpunkte, auf die mittels MindSphere 16 zugegriffen wird.

Innerhalb von MindSphere 16 ist ein Asset eine digitale Darstellung einer Anlage 10 oder eines Teils einer Anlage 10, zum Beispiel einer Maschine innerhalb der Anlage 10, oder eines Automatisierungssystems mit einem oder mehreren mit MindSphere 16 verbundenen Automatisierungsgeräten (z. B. PLC) .

Sogenannte Aspects sind ein Datenmodellierungsmechanismus für Assets. Aspects gruppieren Datenpunkte basierend auf deren logischer, räumlicher und/oder funktionaler Zuordnung. Beispiel: Ein Pumpenaggregat (Asset) hat einen Energieverbrauch (Aspect), zu dem die Datenpunkte "Leistung", "Strom", "Spannung" usw. gehören. Der Aspect wird mittels eines in der Fachterminologie als Asset-Manager bezeichneten Computerprogramms definiert und sein Name kann frei gewählt werden, sollte jedoch eine Verbindung zu Datenpunkten und/oder dem jeweiligen Asset haben. Ein Aspect kann aus mehreren Variablen bestehen und jede Variable wird mittels des Asset Managers mit einer Datenquelle verbunden ("data mapping").

Die Darstellung in FIG 2 zeigt beispielhaft einen Aspect 20 einer Windkraftanlage. Eine Windkraftanlage umfasst einen Generator. Dafür ist in MindSphere 16 ein Aspect 20 angelegt. Dieser fasst in Form einzelner Variablen 22 Eigenschaften des Generators zusammen, zum Beispiel die Drehgeschwindigkeit ("RotationSpeed") und die erzeugte Spannung ("Voltage"). Jede Variable 22 hat einen Datentyp (hier "int" bzw. "double"). Jeder Variable 22 kann eine Einheit zugeordnet sein (hier "rpm" für eine Drehzahl bzw. "V" für eine elektrische Spannung). Jede Variable 22 ist mit einem Datenpunkt verknüpft. Die Verknüpfung ist nur symbolisch mittels eines Verknüpfungssymbols 24 gezeigt. Eine konkrete Formulierung einer Verknüpfung ("Mapping") kann zum Beispiel wie folgt lauten: "AnlageXY.AggregatXY.DatenpunktXY.Drehzahl". Dabei sind "AnlageXY" etc. jeweils Bezeichner, die als Beispiel für einen in einem Automatisierungsprojekt konkret verwendeten Bezeichner stehen. Bei einer Windturbine oder einer Windkraftanlage kann die Verknüpfung zum Beispiel wie folgt lauten: Windturbine1.Generator1.Performance.Drehzahl.

Aufgrund eines Datenmodells mit Assets und Aspects 20 erfolgt eine Datenerfassung bei der jeweiligen Anlage 10 und eine Übermittlung der Daten 12, nämlich der von einzelnen Datenquellen und Datenpunkten stammenden Daten 12, an MindSphere 16. Die übermittelten Daten 12 werden dann innerhalb von MindSphere 16 oder durch MindSphere 16 für eine weitere Verarbeitung und Auswertung verfügbar gemacht.

Die Daten 12 sind mit zumindest einem Datenbezeichner 20, 22 assoziiert. Beim dargestellten Beispiel fungieren der Name der Variablen 22 und der Name des Aspects 20 als Datenbezeichner 20, 22. Allgemein fungieren aus einem jeweiligen IoT-Datenmodell stammende Namen (Variablennamen, Typennamen, Aspectnamen, Assetnamen) oder IoT-Geräteinformationen als Datenbezeichner 20, 22.

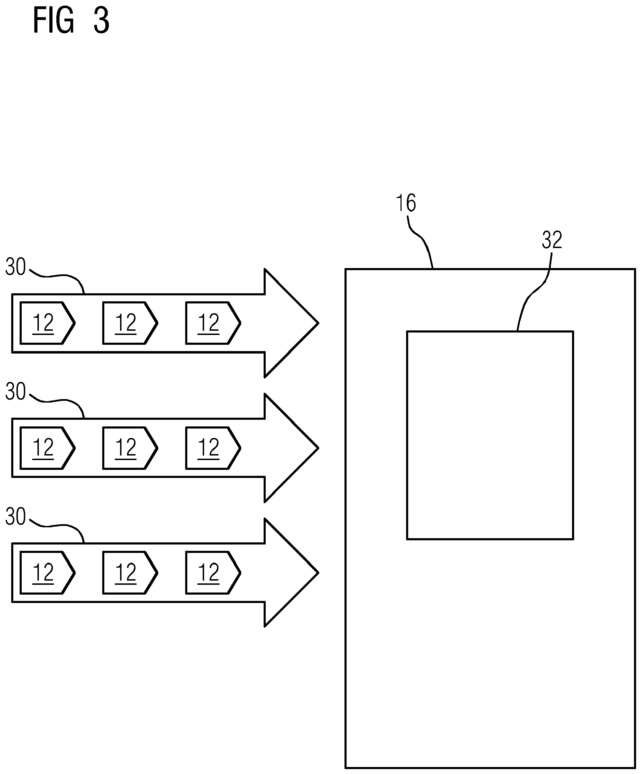

MindSphere 16 empfängt die Daten 12 in Form eines insbesondere unformatierten Datenstroms 30 (FIG 3), zum Beispiel in Form von sogenannten Key-Value-Paaren, also in Form von Paaren von jeweils mit einem Datenbezeichner 20, 22 versehenen Datum 12. Von jeder Anlage 10 kann dabei mehr als ein Datenstrom 30 stammen, zum Beispiel ein Datenstrom 30 von jeder Datenquelle oder ein Datenstrom 30 von jedem Datenpunkt. Zumindest stammt von jeder Anlage 10 zumindest ein Datenstrom 30. In der Darstellung in FIG 3 sind exemplarisch drei Datenströme 30 gezeigt. Jeder Datenstrom 30 stammt zum Beispiel von einer der in FIG 1 gezeigten Anlagen 10. Jeder Datenstrom 30 umfasst als Daten 12 zum Beispiel Drehzahldaten. Die Art der von einem Datenstrom 30 umfassten Daten 12 ist automatisch nicht unmittelbar erkennbar. Darum ist jeder Datenstrom 30 oder die davon umfassten Daten 12 mit zumindest einem Datenbezeichner 20, 22 assoziiert. Bei einem ausreichend eindeutigen Datenbezeichner 20, 22 können zum Beispiel die Drehzahldaten der Anlagen 10 in geeigneter Art und Weise zusammengefasst werden, sodass eine zusammenfassende Übersicht erstellt werden kann.

Allerdings ist gerade eine solche Eindeutigkeit der Datenbezeichner 20, 22 oftmals nicht gegeben. Häufig werden Datenbezeichner 20, 22 in einer jeweiligen Landessprache verwendet. Zusätzlich zu dem eingangs verwendeten Beispiel kann dies auch am Beispiel von Drehzahldaten gezeigt werden. Als Bezeichner für solche Drehzahldaten kommen in unterschiedlichen Sprachen unterschiedliche Worte oder Ausdrücke in Betracht (deutsch: "Drehzahl"; englisch: "revolution speed", "rotational frequency" oder "speed"; fränzösisch: "nombre de tours", "frequence de rotation" oder "vitesse") und/oder es werden Abkürzungen verwendet ("rev", "rot" etc.).

Dies resultiert daraus, dass insbesondere industrielle Großprojekte mit räumlich verteilten Anlagen 10, insbesondere in unterschiedlichen Staaten befindliche Anlagen 10, in kundenspezifischer und/oder landesspezifischer Konfiguration erstellt werden und daher Daten 12 mit unterschiedlicher Bezeichnung (Namensgebung) erzeugen und an MindSphere 16 (an die Cloud-Plattform 16) senden. Dies führt zu dem Problem, dass solche Daten 12 nur mit hohem manuellen Aufwand in übergeordneten Auswertungen auf einheitliche Variablen umgerechnet oder überführt werden können. Hier setzt die vorliegende Erfindung an.

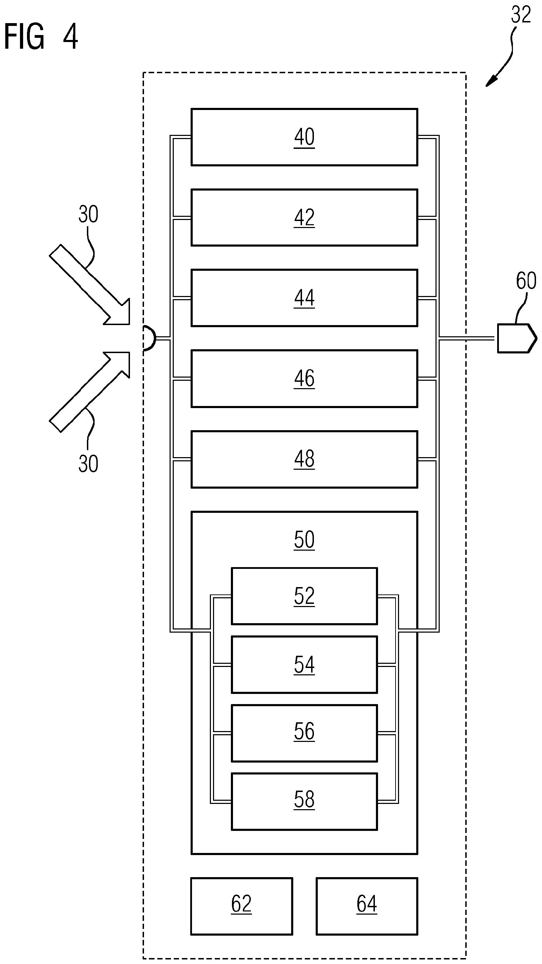

Gemäß dem hier vorgeschlagenen Ansatz ist in MindSphere 16 eine Analyseeinheit 32 vorgesehen, welche zumindest temporär jeden Datenstrom 30 analysiert. Die Analyseeinheit 32 ist in Software implementiert und in der Darstellung in FIG 4 mit weiteren Einzelheiten gezeigt.

Danach umfasst die Analyseeinheit 32 zumindest eine Funktionseinheit 40-50, mittels derer eine Analyse eines eingehenden Datenstroms 30 oder mehrerer eingehender Datenströme 30 erfolgt. Bei der dargestellten, grundsätzlich optionalen Ausführungsform umfasst die Analyseeinheit 32 eine Mehrzahl einzelner, unabhängiger Funktionseinheiten 40-50, mit denen jeweils eine spezifische Analyse eingehender Datenströme 30 und der davon umfassten Daten 12 erfolgt. Jede Funktionseinheit 40-50 führt dabei im weitesten Sinne einen Vergleich der Datenbezeichner 20, 22 und/oder der damit assoziierten Daten 12 von zumindest zwei Datenströmen 30 durch und am Ausgang jeder Funktionseinheit 40-50 erscheint als Analyseergebnis eine im Folgenden als Konfidenzwert bezeichnete Größe. Der Konfidenzwert kodiert dabei, mit welcher Wahrscheinlichkeit davon ausgegangen werden kann, dass die analysierten Datenströme 30 und die davon umfassten Daten 12 thematisch zusammengehören. Dies ist zum Beispiel dann der Fall, wenn die Daten 12 jeweils Drehzahlen gleicher oder vergleichbarer Einheiten, zum Beispiel eines Generators einer Windkraftanlage, oder Temperaturen gleicher oder vergleichbarer Einheiten, also zum Beispiel Temperaturen eines Reaktionsbehältnisses, und so weiter, darstellen.

Die Kodierung des Konfidenzwerts ist grundsätzlich beliebig. In Betracht kommen eine Kodierung in Prozent, also zum Beispiel Werte von "0%" bis "100%", eine Kodierung mit Werten von "0,0" bis "1,0" oder auch eine Kodierung in alphanumerische Form entsprechend einer Ordinalskala. Im Folgenden wird die Beschreibung im Interesse einer besseren Lesbarkeit - aber ohne Verzicht auf eine weitergehende Allgemeingültigkeit - anhand eines mit Werten von "0,0" bis "1,0" ausgedrückten Konfidenzwerts fortgesetzt. Ein Konfidenzwert von "1,0" bedeutet dabei, dass davon ausgegangen werden kann, dass die analysierten Datenströme 30 und die davon umfassten Daten 12 in der oben skizzierten Art und Weise thematisch zusammengehören. Ein Konfidenzwert von "0,0" bedeutet entsprechend, dass kein solcher thematischer Zusammenhang zwischen den analysierten Datenströmen 30 und den davon umfassten Daten 12 festgestellt werden konnte.

Die Funktionseinheiten 40-50 sind bevorzugt einzeln aktivierbar und deaktivierbar. Nur eine aktivierte Funktionseinheit nimmt an der Analyse teil. Bei einer besonderen Ausführungsform der Analyseeinheit 32 ist vorgesehen, dass einzelne Funktionseinheiten 40-50 in einer vorgegebenen oder vorgebbaren Reihenfolge aktivierbar sind (sequentielle Abfolge) und beim Betrieb der Analyseeinheit 32 in der jeweiligen Reihenfolge aktiviert werden. Nachfolgend werden die einzelnen Funktionseinheiten 40-50 erläutert:
Eine erste Funktionseinheit 40 führt eine sprachliche Analyse in Bezug auf von den Datenströmen 30 umfasste Datenbezeichner 20, 22 oder den Daten 12 oder den Datenströmen 30 in sonstiger Art zugeordnete (zum Beispiel gemäß dem IoT-Datenmodell oder aufgrund einer IoT-Geräteinformation) Datenbezeichner 20, 22 durch. Die erste Funktionseinheit 40 kann folglich auch als Sprachanalysefunktionseinheit 40 bezeichnet werden. Mittels dieser Funktionseinheit 40 wird automatisch (zum Beispiel mittels zumindest eines elektronischen Wörterbuchs) zum Beispiel erkannt, dass Bezeichner wie "Drehzahl", "revolution speed", "rotational frequency", "speed", "nombre de tours", "frequence de rotation", "vitesse", "rev", "rot" etc. ein und dasselbe bezeichnen, nämlich eine Drehzahl. Damit ist automatisch erkannt, dass es sich bei den von den Datenströmen 30 umfassten Daten 12 um Drehzahldaten handelt und die Zusammengehörigkeit der Datenströme 30 und der davon umfassten Daten 12 kann abgespeichert werden.

In einem konkreten, gleichwohl exemplarischen Fall ist zum Beispiel einer der Datenströme 30 mit dem Datenbezeichner 20, 22 "Drehzahl" und ein anderer Datenstrom 30 mit dem Datenbezeichner 20, 22 "frequence de rotation" assoziiert. Mittels der ersten Funktionseinheit 40 wird automatisch die sprachliche Gleichheit der beiden Datenbezeichner 20, 22 erkannt. Als Konfidenzwert wird dann der Wert "1,0" ausgegeben. Dies resultiert daraus, dass bei dem angenommenen Beispiel beide Datenbezeichner 20, 22 in der mit den Datenströmen 30 assoziierten Schreibweise zum Beispiel in einem elektronischen Wörterbuch enthalten sind, auf das die Funktionseinheit 40 zugreift. Bei einer abweichenden Schreibweise, zum Beispiel "frequence de rotation" anstelle von "frequence de rotation" ist eine absolute Gleichheit nicht mehr gegeben. Dies wird automatisch in dem Konfidenzwert berücksichtigt. Dann wird zum Beispiel ein Konfidenzwert von "0,95" ausgegeben. Auf diese Weise sind auch mit Datenströmen 30 assoziierte Datenbezeichner 20, 22 auswertbar, die zum Beispiel von einem elektronischen Wörterbuch nicht umfasst sind, wie zum Beispiel "frequence de rotation" oder "freq de rotation" etc.

Eine zweite Funktionseinheit 42 führt eine statistische Analyse der von den Datenströmen 30 umfassten Daten 12 durch und kann folglich auch als Statistikanalysefunktionseinheit 42 bezeichnet werden. Diese Funktionseinheit 42 betrachtet die von den Datenströmen 30 umfassten Daten 12 und ermittelt beispielsweise Minimalwerte, Maximalwerte, Mittelwerte, Standardabweichungen und/oder Häufigkeitsverteilungen etc. Die oder jede zu jeweils einem Datenstrom 30 ermittelte statistische Größe kann mittels dieser Funktionseinheit 42 automatisch mit entsprechenden, zu einem anderen Datenstrom 30 ermittelten statistischen Größen verglichen werden. In Abhängigkeit von der Übereinstimmung der statistischen Größen ergibt sich ein Konfidenzwert am Ausgang dieser Funktionseinheit 42. Wenn also zum Beispiel bei zwei Datenströmen 30 die davon umfassten Daten 12 identische Minimalwerte und identische Maximalwerte aufweisen, wird als Konfidenzwert "1,0" ausgegeben. Bei nicht exakt übereinstimmenden statistischen Größen wird dies entsprechend in dem Konfidenzwert berücksichtigt. Je weiter die ermittelten statistischen Größen voneinander abweichen, desto geringer ist der Konfidenzwert.

Eine dritte Funktionseinheit 44 führt eine Spektralanalyse der von den Datenströmen 30 umfassten Daten 12 durch und kann folglich auch als Spektralanalysefunktionseinheit 44 bezeichnet werden. Auch diese Funktionseinheit 44 betrachtet die von den Datenströmen 30 umfassten Daten 12 und ermittelt jeweils zum Beispiel mittels einer FFT (Fast Fourier Transformation) die spektralen Anteile der von den Datenströmen 30 umfassten Daten 12. Diese werden in einem nachfolgenden Schritt miteinander verglichen und in Abhängigkeit vom Grad der Übereinstimmung ergibt sich ein Konfidenzwert, nämlich ein umso höherer Konfidenzwert, je größer der Grad der Übereinstimmung ist.

Eine vierte Funktionseinheit 46 führt eine Korrelationsanalyse der von den Datenströmen 30 umfassten Daten 12 durch und kann folglich auch als Korrelationsanalysefunktionseinheit 46 bezeichnet werden. Auch diese Funktionseinheit 46 betrachtet die von den Datenströmen 30 umfassten Daten 12 und ermittelt beispielsweise mittels einer Kreuzkorrelationsfunktion (KKF) die Korrelation der Abfolge der von den Datenströmen 30 umfassten Daten 12. Der Konfidenzwert ergibt sich aufgrund des Ergebnisses der Kreuzkorrelationsfunktion.

Eine fünfte Funktionseinheit 48 führt eine grundsätzlich an sich bekannte sogenannte Clusteranalyse der von den Datenströmen 30 umfassten Daten 12 durch und kann folglich auch als Clusteranalysefunktionseinheit 48 bezeichnet werden. Auch diese Funktionseinheit 48 betrachtet die von den Datenströmen 30 umfassten Daten 12. Aufgrund jedes Datenstroms 30 und dessen Daten 12 resultiert zumindest ein Cluster. Die Funktionseinheit 48 ermittelt die Cluster und vergleicht diese, zum Beispiel in Bezug auf deren Ort, Form und/oder Ausdehnung. Auf Basis von Zahlenwerten, welche solche charakteristischen Parameter der ermittelten Cluster beschreiben, ist ein automatischer Vergleich der ermittelten Cluster möglich. Der Konfidenzwert ergibt sich in Abhängigkeit vom Grad der Übereinstimmung der ermittelten Cluster in Bezug auf solche oder ähnliche charakteristische Parameter.

Eine sechste Funktionseinheit 50 führt eine Kontextanalyse durch und kann folglich auch als Kontextanalysefunktionseinheit 50 bezeichnet werden. Diese Funktionseinheit 50 umfasst selbst zumindest eine weitere Funktionseinheit 52-58. Beim gezeigten Ausführungsbeispiel umfasst die Kontextanalysefunktionseinheit 50 in grundsätzlich optionaler Art und Weise mehrere einzeln aktivierbare und deaktivierbare weitere Funktionseinheiten 52-58. Die oder jede weitere Funktionseinheit 52-58 gibt einen Konfidenzwert - wie oben beschrieben - aus. Die Konfidenzwerte aktivierter weiterer Funktionseinheiten 52-58 werden zu einem Konfidenzwert der Kontextanalysefunktionseinheit 50 zusammengefasst.

Eine erste weitere Funktionseinheit 52 führt eine Kontextanalyse in Bezug auf eine Relation der bei der Datenübermittlung in MindSphere 16 involvierten Asset- oder Aspect-Typen durch. Wenn eine Übereinstimmung der Typen (Datentypen) besteht, ist eine hohe Korrelation gegeben und es resultiert ein entsprechender Konfidenzwert.

Eine zweite weitere Funktionseinheit 54 führt eine Kontextanalyse in Bezug auf zumindest einen der folgenden Faktoren durch: einen Typ (Gerätetyp) desjenigen Geräts, dem der Datenpunkt zugeordnet ist, von dem die Daten 12 stammen; das Protokoll, mit dem die Daten 12 übermittelt werden (Datenprotokoll); einen Standort des Geräts mit dem Datenpunkt und/oder dem Gerät zugeordnete Sensoren. In Bezug auf jeden betrachteten Faktor kann ein Grad der Übereinstimmung ermittelt werden. Wenn sich zum Beispiel ergibt, dass zwei Datenströme 30 jeweils von Geräten desselben Typs stammen, ergibt sich ein hoher Grad an Übereinstimmung und ein entsprechender Konfidenzwert. Wenn mehr als ein Faktor überprüft wird (zum Beispiel Gerätetyp und Datenprotokoll) und hinsichtlich beider Faktoren ein hoher Grad an Übereinstimmung ermittelt wird, ergibt sich ein höherer Konfidenzwert. Der tatsächliche Konfidenzwert hängt davon ab, wie viele Faktoren gleichzeitig geprüft werden oder geprüft werden können und welcher Grad an Übereinstimmung in Bezug auf den oder jeden geprüften Faktor ermittelt wurde.

Eine dritte weitere Funktionseinheit 56 führt eine Kontextanalyse in Bezug auf eine Abtastrate, mit der die Daten 12 in dem jeweiligen Datenstrom 30 eintreffen, durch. Bei einer gleichen oder im Wesentlichen gleichen Abtastrate ergibt sich ein hoher Konfidenzwert. Je weiter die ermittelten Abtastraten voneinander abweichen, desto geringer ist der von dieser weiteren Funktionseinheit 56 ausgegebene Konfidenzwert. Die Abtastrate ergibt sich zum Beispiel, indem die von einem Datenstrom 30 umfassten Daten 12 mit einem Zeitstempel versehen sind, sodass anhand einer Differenz zweier solcher Zeitinformationen die Abtastrate ermittelbar ist. Eine weitere Möglichkeit zur Ermittlung der Abtastrate besteht zum Beispiel darin, dass die Definition der bei der Datenübermittlung in MindSphere 16 involvierten Asset- oder Aspect-Typen - oder allgemein das IoT-Datenmodell - eine Spezifikation der Abtastrate umfasst, sodass der entsprechende Wert dort von dieser weiteren Funktionseinheit 56 ausgelesen werden kann.

Eine vierte weitere Funktionseinheit 58 führt eine Kontextanalyse in Bezug auf einen Datentyp der Variablen 22 (FIG 2) und/oder einen Bezeichner der Variablen 22 der bei der Datenübermittlung in MindSphere 16 involvierten Assets und Aspects 20 durch. Ein hoher Grad an Übereinstimmung in Bezug auf den oder jeden durch diese weitere Funktionseinheit 58 überprüften Faktor führt zu einem entsprechend hohen Konfidenzwert.

Die Analyse der Daten 12 eines ersten Datenstroms 30 sowie der Daten 12 zumindest eines weiteren Datenstroms 30 und/oder zumindest eines jeweiligen Datenbezeichners 20, 22 kann gleichzeitig oder zeitlich nacheinander erfolgen. Bei einer nicht-gleichzeitigen Analyse wird zum Beispiel ein Datenbezeichner 20, 22 gespeichert und zum Beispiel mittels der Sprachanalysefunktionseinheit 40 mit einem später ermittelten Datenbezeichner 20, 22 eines anderen Datenstroms 30 und/oder der davon umfassten Daten 12 verglichen. Gleiches gilt entsprechend, wenn zum Beispiel statistische Kennwerte bezüglich der von einem Datenstrom 30 umfassten Daten 12 ermittelt werden, welche bis zu einem Vergleich (zum Beispiel mittels der Statistikanalysefunktionseinheit 42) mit später ermittelten statistischen Kennwerten eines anderen Datenstroms 30 zwischengespeichert werden.

Abhängig davon, welche Funktionseinheiten 40-50 und gegebenenfalls welche weiteren Funktionseinheiten 52-58 aktiviert sind, zum Beispiel entsprechend einem Aktivierungsschema 62 (FIG 4), ergibt sich automatisch eine entsprechende Vielzahl von Konfidenzwerten. Diese werden auf genau einen Konfidenzwert (Gesamtkonfidenzwert 60) abgebildet, zum Beispiel durch Bildung eines Mittelwerts oder durch Bildung eines mit einzelnen Gewichtsfaktoren gewichteten Mittelwerts.

Optional ist dabei ein der Bildung des Gesamtkonfidenzwerts 60 zugrundeliegendes Abbildungsschema 64 (FIG 4) abhängig von der Art und der Anzahl der aktivierten Funktionseinheiten 40-50, 52-58. Ein Default-Abbildungsschema kann zum Beispiel vorsehen, dass jeder Funktionseinheit 40-50 ein Gewichtsfaktor zugewiesen ist, sodass sich der Gesamtkonfidenzwert 60 als Summe der Produkte der einzelnen Konfidenzwerte und des jeweiligen Gewichtsfaktors dividiert durch die Anzahl der aktivierten Funktionseinheiten 40-50 ergibt.

Ein von einer Aktivierung einzelner Funktionseinheiten 40-50 abhängiges Abbildungsschema 64 (aktivierungsabhängiges Abbildungsschema) kann zum Beispiel eine Maximum-Verknüpfung der Konfidenzwerte einzelner Funktionseinheiten 40-50 vorsehen, derart, dass als Gesamtkonfidenzwert 60 der größte Konfidenzwert der aktivierten Funktionseinheiten 40-50 resultiert (bei Konfidenzwerten, die nur entweder den diskreten Wert "0,0" oder "1,0" annehmen können, entspricht dies einer logischen ODER-Verknüpfung). Bei einer Aktivierung anderer Funktionseinheiten 40-50 kann ein aktivierungsabhängiges Abbildungsschema 64 eine andere Verknüpfungsform der einzelnen Konfidenzwerte vorsehen, zum Beispiel derart, dass sich der Gesamtkonfidenzwert 60 als Mittelwert der einzelnen Konfidenzwerte der aktivierten Funktionseinheiten 40-50 ergibt, oder zum Beispiel derart, dass sich der Gesamtkonfidenzwert 60 aufgrund zumindest einer logischen Verknüpfung, zum Beispiel zumindest einer Wenn-Dann-Verknüpfung, der einzelnen Konfidenzwerte der aktivierten Funktionseinheiten 40-50 ergibt. Hier sind verschiedenste Varianten (ggf. auch in Kombination miteinander) denkbar und vorteilhaft anwendbar. Zum Beispiel kann bei zwei oder mehr aktivierten Funktionseinheiten 40-50, wobei von einer der aktivierten Funktionseinheiten 40-50 ein besonders aussagekräftiger Konfidenzwert erwartet wird, zum Beispiel von der Sprachanalysefunktionseinheit 40, deren Konfidenzwert gegenüber dem Konfidenzwert weiterer aktivierter Funktionseinheiten 40-50 höher gewichtet werden. Eine Auswahl und Anwendung einer Formel oder Bildungsregel, also eines spezifischen Abbildungsschemas, zum Ermitteln des Gesamtkonfidenzwerts 60 mit einer solchen Höhergewichtung eines Konfidenzwerts erfolgt auf Basis einer entsprechenden logischen Verknüpfung. Alternativ oder zusätzlich kann mittels einer entsprechenden logischen Verknüpfung erfasst werden, wenn ein Konfidenzwert einer ersten Funktionseinheit 40-50 in einem bestimmten Wertebereich eine Berücksichtigung eines Konfidenzwerts einer anderen Funktionseinheit 40-50 verbietet oder unnötig macht oder eine höhere oder niedrigere Gewichtung dieses Konfidenzwerts erfordert.

Zur gezielten Aktivierung und Deaktivierung einzelner Funktionseinheiten 40-50 und gegebenenfalls einzelner weiterer Funktionseinheiten 52-58 ist in einem der Analyseeinheit 32 zugänglichen Speicher zumindest ein Aktivierungsschema 62 (FIG 4) angelegt, auf das die Analyseeinheit 32 zur automatischen Aktivierung und Deaktivierung einzelner Funktionseinheiten 40-50, 52-58 zugreift. Das Aktivierungsschema 62 legt - zum Beispiel in Form von oder nach Art einer binären Maske - fest, welche Funktionseinheiten 40-50, 52-58 aktiv sind oder nicht aktiv sind. Eine Position eines Datums in einer solchen Maske bestimmt dann, auf welche Funktionseinheit 40-50, 52-58 sich die Aktivierung oder Deaktivierung bezieht. Zum Beispiel bedeutet eine Maske wie "100001" eine Aktivierung der ersten Funktionseinheit 40 und der fünften Funktionseinheit 50, während die anderen Funktionseinheiten 42-48 deaktiviert sind (entsprechendes gilt für die weiteren Funktionseinheiten 52-58). Die Analyseeinheit 32 liest ein solches Aktivierungsschema 62 aus und nimmt eine Aktivierung und Deaktivierung der einzelnen Funktionseinheiten 40-50 entsprechend dem Aktivierungsschema 62 vor.

Im Falle einer vorgegebenen oder vorgebbaren sequentiellen Abfolge aktivierter Funktionseinheiten 40-50 umfasst das Aktivierungsschema 62 auch die Aktivierungsreihenfolge der einzelnen Funktionseinheiten 40-50.

Für den Fall, dass - wie dies bei einer besonderen Ausführungsform des hier vorgeschlagenen Ansatzes in grundsätzlich optionaler Art und Weise vorgesehen ist - die Bildung des Gesamtkonfidenzwerts 60 von der Art und Anzahl der aktivierten Funktionseinheiten 40-50, 52-58 abhängt, ist in einem der Analyseeinheit 32 zugänglichen Speicher zumindest ein Abbildungsschema 64 (FIG 4) angelegt, auf das die Analyseeinheit 32 zur automatischen Bildung des Gesamtkonfidenzwerts 60 zugreift.

Die Analyseeinheit 32 und die oder jede davon umfasste Funktionseinheit 40-50, 52-58 sind bevorzugt in Software implementiert und entsprechend ist die Darstellung der Analyseeinheit 32 in FIG 4 eine schematisch vereinfachte Darstellung eines Computerprogramms, welches eine Implementation der Funktion der Analyseeinheit 32 (mit der oder jeder davon umfassten Funktionseinheit 40-50, 52-58), gegebenenfalls zusätzlich eine Implementation der Funktion zur Auswertung zumindest eines Aktivierungsschemas 62 und/oder zumindest eines Abbildungsschemas 64, umfasst.

Entsprechend ist ein Computersystem 18 (FIG 1), insbesondere ein an sich bekanntes Computersystem 18 mit zumindest einem Prozessor und einem Speicher, in dessen Speicher ein solches Computerprogramm geladen ist und dass beim Betrieb des Computersystems 18 ausgeführt wird, ein Beispiel für eine Vorrichtung mit einer Implementation der hier beschriebenen Erfindung.

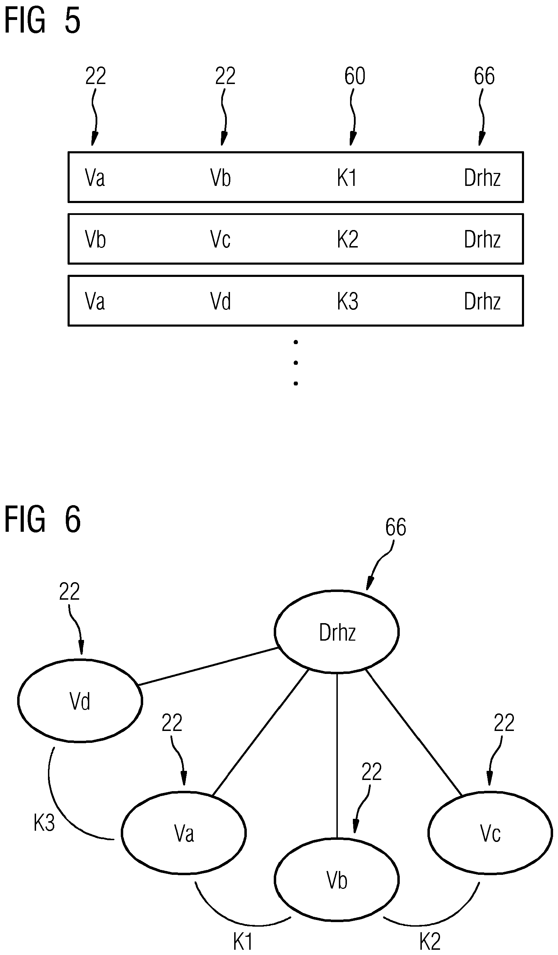

Das Ergebnis der Analyse zweier Datenströme 30 und der davon umfassten Daten 12 mittels der Analyseeinheit 32 ist ein die Zusammengehörigkeit der Datenströme 30, der davon umfassten Daten 12 und/oder der jeweiligen Datenbezeichner 20, 22 ausdrückender Gesamtkonfidenzwert 60. Das Ergebnis kann in Form einer Tabelle dargestellt werden, zum Beispiel in Form einer Tabelle, wie dies in der Darstellung in FIG 5 gezeigt ist. Eine alternative Darstellung der Ergebnisse ist in der Darstellung in FIG 6 in Form eines Baums (Graph, Ontologie) gezeigt.

In der Tabelle in FIG 5 sowie in dem Graph in FIG 6 stehen die Texte "Va", "Vb", "Vc" und "Vd" für beliebige Variable 22 (FIG 2) und die Texte "K1", "K2" und "K3" für jeweils in Bezug auf Datenströme 30 mit Daten 12 dieser Variablen 22 ermittelte Gesamtkonfidenzwerte 60. Bei einem Gesamtkonfidenzwert 60 oberhalb eines vorgegebenen oder vorgebbaren Schwellwerts - zum Beispiel "0,8" - gehören die entsprechenden Variablen 22 in der oben skizzierten Art zusammen. Bei einem Gesamtkonfidenzwert 60 oberhalb eines vorgegebenen oder vorgebbaren Grenzwerts - zum Beispiel "0,5", aber unterhalb des Schwellwerts, können die Variablen 22 manuell als in der oben skizzierten Art zusammengehörig markiert werden. Zusammengehörige Variablen 22 werden mittels eines übergeordneten Variablennamens 66 als zusammengehörig gekennzeichnet. Dieser wird automatisch durch die Analyseeinheit 32 anhand der Art der Daten 12 oder anhand einer Bezeichnung einer Variablen 22, zum Beispiel der ersten bei der Analyse betrachteten Variablen 22, erzeugt. Symbolisch ist der übergeordnete Variablennamen 66 in den Darstellungen in FIG 5 und FIG 6 als "Drhz" gezeigt, wobei der Text für das Wort "Drehzahl" stehen soll und sich ergibt, weil es sich bei den analysierten Daten 12 um Drehzahldaten handelt.

Optional umfasst das Abbildungsschema 64 oder alternativ auch des Aktivierungsschema 62 eine dynamische Anpassung des Grenz- und/oder Schwellwerts. Eine solche Anpassung erfolgt zum Beispiel ausgehend von einem vorgegebenen oder vorgebbaren Grenz- und Schwellwert, zum Beispiel einem Schwellwert von "0,8" und einem Grenzwert von "0,5". Dann kann zum Beispiel bei einem Aktivierungsschema 62, welches die Aktivierung einer Funktionseinheit 40-50 vorsieht, deren Konfidenzwert besonders aussagekräftig hinsichtlich der Zusammengehörigkeit zweier Variablen 22 ist, der Schwellwert im Wege einer dynamischen Anpassung abgesenkt werden, zum Beispiel um "0,1", denn einem besonders aussagekräftigen Konfidenzwert kann zum Beispiel schon bei einem Konfidenzwert größer oder gleich "0,7" von einer automatisch erkannten Zusammengehörigkeit ausgegangen werden. Umgekehrt kann bei einer Funktionseinheit 40-50, deren Konfidenzwert weniger aussagekräftig ist, der Schwellwert im Wege einer dynamischen Anpassung angehoben werden, denn bei einem weniger aussagekräftigen Konfidenzwert ist eher ein hoher Konfidenzwert erforderlich, damit automatisch auf eine Zusammengehörigkeit geschlossen werden kann. Für eine automatische dynamische Anpassung des Grenzwerts gilt dies entsprechend.

Der übergeordnete Variablenname 66 erlaubt einen Zugriff auf die als zusammengehörig ermittelten Variablen 22. Mit dem übergeordneten Variablennamen 66 kann zum Beispiel eine Suche in den in MindSphere 16 verfügbaren Daten formuliert werden und bei der Auswertung eines entsprechenden Suchstrings wird automatisch der übergeordnete Variablenname 66 in die unter diesem zusammengefassten und als zusammengehörig identifizierten Variablen 22 umgesetzt. Ein Suchstring wie zum Beispiel "FIND Drhz" wird dann entsprechend automatisch in einen Suchstring wie "FIND Va, Vb, Vc, Vd" umgesetzt. Damit können aktuelle und/oder historische Werte der ermittelten Variablen 22 aus der Datenbasis von MindSphere 16 abgerufen werden und mit den abgerufenen Werten kann zum Beispiel eine Gegenüberstellung der Drehzahldaten verschiedener Windkraftanlagen (Anlagen 10) erzeugt werden. Allgemein formuliert bedeutet dies, dass der ermittelte übergeordnete Variablenname 66 als Schlüsselwort in einer Datenbank-Abfrage verwendet werden kann, nämlich einer Abfrage der MindSphere-Datenbank.

Im Ergebnis ist damit aufgrund der vorangehenden Analyse mittels der Analyseeinheit 32 der zentrale Zugriff auf zusammengehörige Daten mittels eines Bezeichners (dem übergeordneten Variablennamen 66) möglich, unabhängig davon, wie die Daten 12, die Variablen 22 oder die bei der Datenübermittlung in MindSphere 16 involvierten Assets und Aspects 20 ursprünglich bezeichnet waren.

Bei einer vorteilhalten Ausführungsform des hier vorgeschlagenen Ansatzes werden Gesamtkonfidenzwerte 60, wie sie in der Darstellung in FIG 5 gezeigt sind, nach einer anfänglichen ersten Ermittlung von Zeit zu Zeit, zum Beispiel zu vorgegebenen oder vorgebbaren Zeitpunkten oder in vorgegebenen oder vorgebbaren zeitlichen Abständen, aufgrund zwischenzeitlich hinzugekommener Daten 12 erneut ermittelt. Dann kann sich im Vergleich zu einem zuvor ermittelten Gesamtkonfidenzwert 60 ein anderer Gesamtkonfidenzwert 60 ergeben und dies führt je nach dem jeweils resultierenden neuen Gesamtkonfidenzwert 60 zu einer Auflösung einer bisher bestehenden Zuordnung zu dem übergeordneten Variablennamen 66 oder einer neuen Zuordnung zu dem übergeordneten Variablennamen 66.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird zuvorderst ein Verfahren zur automatischen Verarbeitung von Datenbezeichnern 20, 22. Mit Datenbezeichnern 20, 22 assoziierte Daten 12 werden an eine Cloud-Plattform 16 übermittelt, zum Beispiel von verschiedenen, aber gleichartigen technischen Anlagen 10. Die Cloud-Plattform 16 umfasst eine Analyseeinheit 32 mit zumindest einer Funktionseinheit 40-50 und die oder jede Funktionseinheit 40-50 nimmt eine Analyse der an die Cloud-Plattform 16 übermittelten Daten 12 und/oder assoziierter Datenbezeichner 20, 22 vor. Als Ergebnis der Analyse gibt die Funktionseinheit 40-50 oder gibt jede Funktionseinheit 40-50 einen Konfidenzwert aus. Der oder jeder Konfidenzwert wird auf einen Gesamtkonfidenzwert 60 abgebildet, welcher eine Zusammengehörigkeit zweier Datenbezeichner 20, 22 kodiert. Als zusammengehörig ermittelte Datenbezeichner 20, 22 werden unter einem übergeordneten Variablennamen 66 zusammengefasst. Der übergeordnete Variablenname 66 ist als Schlüsselwort für eine Datenbankabfrage verwendbar, welche im Ergebnis Daten zu allen unter dem übergeordneten Variablennamen 66 zusammengefassten Datenbezeichnern 20, 22 liefert.

## Patentansprüche

1. Verfahren zur automatischen Verarbeitung von Datenbezeichnern (20, 22),
wobei mit Datenbezeichnern (20, 22) assoziierte Daten (12) an eine Cloud-Plattform (16) übermittelt werden,
wobei die Cloud-Plattform (16) eine Analyseeinheit (32) mit zumindest einer Funktionseinheit (40-50) umfasst,
wobei die oder jede Funktionseinheit (40-50) die Daten (12) und assoziierte Datenbezeichner (20, 22) als Eingangswerte empfängt,
wobei die oder jede Funktionseinheit (40-50) jeweils eine Analyse der an die Cloud-Plattform (16) übermittelten Daten (12) und/oder assoziierter Datenbezeichner (20, 22) vornimmt und in Abhängigkeit von einem Ergebnis der Analyse einen jeweiligen Konfidenzwert ausgibt, der die Zusammengehörigkeit zweier Datenbezeichner (20, 22) der zuvor übermittelten Datenbezeichner (20, 22) kodiert,
wobei der oder jeder Konfidenzwert auf einen Gesamtkonfidenzwert (60) abgebildet wird,
wobei als zusammengehörig ermittelte Datenbezeichner (20, 22) unter einem übergeordneten Variablennamen (66) zusammengefasst werden und
wobei der übergeordnete Variablenname (66) als Schlüsselwort für eine Datenbankabfrage verwendbar ist, welche im Ergebnis Daten zu allen unter dem übergeordneten Variablennamen (66) zusammengefassten Datenbezeichnern (20, 22) liefert und wobei Datenbezeichner (20, 22) mit einem Gesamtkonfidenzwert (60) oberhalb eines vorgegebenen oder vorgebbaren Schwellwerts zusammengehörig sind.

2. Verfahren nach einem der vorangehenden Ansprüche,
wobei eine der Funktionseinheiten (40-50) der Analyseeinheit (32) als Sprachanalysefunktionseinheit (40) fungiert, eine automatische sprachliche Analyse der Datenbezeichner (20, 22) durchführt und einen Konfidenzwert in Abhängigkeit vom Ergebnis der sprachlichen Analyse erzeugt.

3. Verfahren nach einem der vorangehenden Ansprüche,
wobei eine der Funktionseinheiten (40-50) der Analyseeinheit (32) als Statistikanalysefunktionseinheit (42) fungiert, eine automatische statistische Analyse der an die Cloud-Plattform (16) übermittelten Daten (12) durchführt und einen Konfidenzwert in Abhängigkeit vom Ergebnis der statistischen Analyse erzeugt.

4. Verfahren nach einem der vorangehenden Ansprüche,
wobei eine der Funktionseinheiten (40-50) der Analyseeinheit (32) als Spektralanalysefunktionseinheit (44) fungiert, eine automatische Spektralanalyse der an die Cloud-Plattform (16) übermittelten Daten (12) durchführt und einen Konfidenzwert in Abhängigkeit vom Ergebnis der Spektralanalyse erzeugt.

5. Verfahren nach einem der vorangehenden Ansprüche,
wobei eine der Funktionseinheiten (40-50) der Analyseeinheit (32) als Korrelationsanalysefunktionseinheit (46) fungiert, eine automatische Korrelationsanalyse der an die Cloud-Plattform (16) übermittelten Daten (12) durchführt und einen Konfidenzwert in Abhängigkeit vom Ergebnis der Korrelationsanalyse erzeugt.

6. Verfahren nach einem der vorangehenden Ansprüche,
wobei eine der Funktionseinheiten (40-50) der Analyseeinheit (32) als Clusteranalysefunktionseinheit (48) fungiert, eine automatische Clusteranalyse der an die Cloud-Plattform (16) übermittelten Daten (12) durchführt und einen Konfidenzwert in Abhängigkeit vom Ergebnis der Clusteranalyse erzeugt.

7. Verfahren nach einem der vorangehenden Ansprüche,
wobei eine der Funktionseinheiten (40-50) der Analyseeinheit (32) als Kontextanalysefunktionseinheit (50) fungiert, eine automatische Kontextanalyse der an die Cloud-Plattform (16) übermittelten Daten (12) und/oder der Datenbezeichner (20, 22) durchführt und einen Konfidenzwert in Abhängigkeit vom Ergebnis der Kontextanalyse erzeugt.

8. Verfahren nach einem der vorangehenden Ansprüche,
wobei die Analyseeinheit (32) zumindest zwei Funktionseinheiten (40-50) aus der Gruppe folgender Funktionseinheiten (40-50) umfasst: Sprachanalysefunktionseinheit (42), Statistikanalysefunktionseinheit (42), Spektralanalysefunktionseinheit (44), Korrelationsanalysefunktionseinheit (46), Clusteranalysefunktionseinheit (48), Kontextanalysefunktionseinheit (50) .

9. Verfahren nach Anspruch 8,
wobei zumindest eine der zumindest zwei Funktionseinheiten (40-50) aktivierbar oder deaktivierbar ist.

10. Verfahren nach Anspruch 9,
wobei die Aktivierung oder Deaktivierung entsprechend einem vorgegebenen oder vorgebbaren Aktivierungsschema (62) erfolgt.

11. Verfahren nach Anspruch 10,
wobei das Aktivierungsschema (62) auch eine Aktivierungsreihenfolge und/oder einen Aktivierungszeitpunkt für die oder jede zu aktivierende Funktionseinheit (40-50) kodiert.

12. Verfahren nach Anspruch 9, 10 oder 11,
wobei der Konfidenzwert jeder aktivierten Funktionseinheit (40-50) entsprechend einem vorgegebenen oder vorgebbaren Abbildungsschema (64) auf den Gesamtkonfidenzwert (60) abgebildet wird.

13. Computerprogramm (32) mit Programmcodemitteln oder Computerprogrammprodukt mit Programmcodemitteln, die auf einem computerlesbaren Datenträger gespeichert sind, um alle Schritte von jedem beliebigen der Ansprüche 1 bis 12 durchzuführen, wenn das Computerprogramm (32) bzw. das Computerprogrammprodukt in einer Cloud-Plattform (16) ausgeführt wird.

14. Computersystem (18) mit einem Speicher, in den ein Computerprogramm (32) nach Anspruch 13 geladen ist, das beim Betrieb des Computersystems (18) mittels eines Prozessors des Computersystems (18) ausgeführt wird und das bei einer Ausführung eine automatischen Verarbeitung von Datenbezeichnern (20, 22) entsprechend einem Verfahren nach einem der Ansprüche 1 bis 13 bewirkt.

## Claims

1. Method for automatically processing data identifiers (20, 22),
wherein data (12) associated with data identifiers (20, 22) are transmitted to a cloud platform (16),
wherein the cloud platform (16) comprises an analysis unit (32) having at least one functional unit (40-50),
wherein the or each functional unit (40-50) receives the data (12) and associated data identifiers (20, 22) as input values,
wherein the or each functional unit (40-50) in each case performs an analysis of the data (12) transmitted to the cloud platform (16) and/or of associated data identifiers (20, 22) and takes a result of the analysis as a basis for outputting a respective confidence value which codes the interrelation between two data identifiers (20, 22) of the previously transmitted data identifiers (20, 22),
wherein the or each confidence value is mapped to an overall confidence value (60),
wherein data identifiers (20, 22) ascertained as being interrelated are combined under a higher-order variable name (66) and
wherein the higher-order variable name (66) is able to be used as a keyword for a database query that ultimately delivers data pertaining to all the data identifiers (20, 22) combined under the higher-order variable name (66) and wherein data identifiers (20, 22) having an overall confidence value (60) above a predefined or predefinable threshold value are interrelated.

2. Method according to the preceding claim,
wherein one of the functional units (40-50) of the analysis unit (32) acts as linguistic analysis functional unit (40), performs an automatic linguistic analysis of the data identifiers (20, 22) and generates a confidence value on the basis of the result of the linguistic analysis.

3. Method according to either of the preceding claims,
wherein one of the functional units (40-50) of the analysis unit (32) acts as statistical analysis functional unit (42), performs an automatic statistical analysis of the data (12) transmitted to the cloud platform (16) and generates a confidence value on the basis of the result of the statistical analysis.

4. Method according to one of the preceding claims,
wherein one of the functional units (40-50) of the analysis unit (32) acts as spectral analysis functional unit (44), performs an automatic spectral analysis of the data (12) transmitted to the cloud platform (16) and generates a confidence value on the basis of the result of the spectral analysis.

5. Method according to one of the preceding claims,
wherein one of the functional units (40-50) of the analysis unit (32) acts as correlation analysis functional unit (46), performs an automatic correlation analysis of the data (12) transmitted to the cloud platform (16) and generates a confidence value on the basis of the result of the correlation analysis.

6. Method according to one of the preceding claims,
wherein one of the functional units (40-50) of the analysis unit (32) acts as cluster analysis functional unit (48), performs an automatic cluster analysis of the data (12) transmitted to the cloud platform (16) and generates a confidence value on the basis of the result of the cluster analysis.

7. Method according to one of the preceding claims,
wherein one of the functional units (40-50) of the analysis unit (32) acts as context analysis functional unit (50), performs an automatic context analysis of the data (12) transmitted to the cloud platform (16) and/or of the data identifiers (20, 22) and generates a confidence value on the basis of the result of the context analysis.

8. Method according to one of the preceding claims,
wherein the analysis unit (32) comprises at least two functional units (40-50) from the group comprising the following functional units (40-50): linguistic analysis functional unit (42), statistical analysis functional unit (42), spectral analysis functional unit (44), correlation analysis functional unit (46), cluster analysis functional unit (48), context analysis functional unit (50).

9. Method according to Claim 8,
wherein at least one of the at least two functional units (40-50) is activable or deactivable.

10. Method according to Claim 9,
wherein the activation or deactivation is effected in accordance with a predefined or predefinable activation scheme (62) .

11. Method according to Claim 10,
wherein the activation scheme (62) also codes an order of activation and/or a time of activation for the or each functional unit (40-50) that is to be activated.

12. Method according to Claim 9, 10 or 11,
wherein the confidence value of each activated functional unit (40-50) is mapped to the overall confidence value (60) in accordance with a predefined or predefinable mapping scheme (64) .

13. Computer program (32) having program code means or computer program product having program code means that are stored on a computer-readable data medium in order to perform all the steps of any one of Claims 1 to 12 when the computer program (32) or the computer program product is executed in a cloud platform (16).

14. Computer system (18) having a memory into which a computer program (32) according to Claim 13 is loaded that, during operation of the computer system (18), is executed by means of a processor of the computer system (18) and that, when executed, causes automatic processing of data identifiers (20, 22) using a method according to one of Claims 1 to 13.

## Revendications

1. Procédé de traitement automatique d'identifiants (20, 22) de données,
dans lequel on transmet à une plateforme (16) de nuage des données (12) associées à des identifiants (20, 22) de données,
dans lequel la plateforme (16) de nuage comprend une unité (32) d'analyse ayant au moins une unité (40-50) fonctionnelle,
dans lequel la ou chaque unité (40-50) fonctionnelle reçoit, comme valeurs d'entrée, les données (12) et des identifiants (20, 22) de données associés,
dans lequel la ou chaque unité (40-50) fonctionnelle effectue respectivement une analyse des données (12) transmises à la plateforme (16) de nuage et/ou d'identifiants (20, 22) de données associés et émet, en fonction d'un résultat de l'analyse, une valeur de confiance respective, qui code la parenté de deux identifiants (20, 22) de données parmi les identifiants (20, 22) de données transmis auparavant,
dans lequel on reproduit la ou chaque valeur de confiance sur une valeur (60) de confiance d'ensemble,
dans lequel on rassemble, sous une dénomination (66) de variable supérieure hiérarchiquement, des identifiants (20, 22) de données déterminés comme apparentés, et
dans lequel la dénomination (66) de variable supérieure hiérarchiquement peut être utilisée comme mot clé pour une demande auprès d'une base de données, qui fournit en résultat des données sur tous les identifiants (20, 22) de données rassemblés sous la dénomination (66) de variable supérieure hiérarchiquement et dans lequel des identifiants (20, 22) de données ayant une valeur (60) de confiance d'ensemble au-dessus d'une valeur de seuil donnée à l'avance ou pouvant l'être sont apparentés.

2. Procédé suivant l'une des revendications précédentes,
dans lequel l'une des unités (40-50) fonctionnelles de l'unité (32) d'analyse sert d'unité (40) fonctionnelle d'analyse vocale, effectue une analyse vocale automatique des identifiants (20, 22) de données et produit une valeur de confiance en fonction du résultat de l'analyse vocale.

3. Procédé suivant l'une des revendications précédentes,
dans lequel l'une des unités (40-50) fonctionnelles de l'unité (32) d'analyse sert d'unité (42) fonctionnelle d'analyse statistique, effectue une analyse statistique automatique des données (12) transmises à la plateforme (16) de nuage et produit une valeur de confiance en fonction du résultat de l'analyse statistique.

4. Procédé suivant l'une des revendications précédentes,
dans lequel l'une des unités (40-50) fonctionnelles de l'unité (32) d'analyse sert d'unité (44) fonctionnelle d'analyse spectrale, effectue une analyse spectrale automatique des données (12) transmises à la plateforme (16) de nuage et produit une valeur de confiance en fonction du résultat de l'analyse spectrale.

5. Procédé suivant l'une des revendications précédentes,
dans lequel l'une des unités (40-50) fonctionnelles de l'unité (32) d'analyse sert d'unité (46) fonctionnelle d'analyse de corrélation, effectue une analyse de corrélation automatique des données (12) transmises à la plateforme (16) de nuage et produit une valeur de confiance en fonction du résultat d'une analyse de corrélation.

6. Procédé suivant l'une des revendications précédentes,
dans lequel l'une des unités (40-50) fonctionnelles de l'unité (32) d'analyse sert d'unité (48) fonctionnelle d'analyse de groupe, effectue une analyse de groupe automatique des données (12) transmises à la plateforme (16) de nuage et produit une valeur de confiance en fonction du résultat de l'analyse de groupe.

7. Procédé suivant l'une des revendications précédentes,
dans lequel l'une des unités (40-50) fonctionnelles de l'unité (32) sert d'unité (50) fonctionnelle d'analyse de contexte, effectue une analyse de contexte automatique des données (12) transmises à la plateforme (16) de nuage et/ou des identifiants (20, 22) de données et produit une valeur de confiance en fonction du résultat de l'analyse de contexte.

8. Procédé suivant l'une des revendications précédentes,
dans lequel l'unité (32) d'analyse comprend au moins deux unités (40-50) fonctionnelles choisies dans le groupe des unités (40-50) fonctionnelles suivant : une unité (42) fonctionnelle d'analyse vocale, une unité (42) fonctionnelle d'analyse statistique, une unité (44) fonctionnelle d'analyse spectrale, une unité (46) fonctionnelle d'analyse de corrélation, une unité (48) fonctionnelle d'analyse de groupe, une unité (50) fonctionnelle d'analyse de contexte.

9. Procédé suivant la revendication 8,
dans lequel au moins l'une des au moins deux unités (40-50) fonctionnelles peut être activée ou désactivée.

10. Procédé suivant la revendication 9,
dans lequel l'activation ou la désactivation s'effectue conformément à un schéma (62) d'activation donné à l'avance ou pouvant l'être.

11. Procédé suivant la revendication 10,
dans lequel le schéma (62) d'activation code également une succession d'activations et/ou un instant d'activation pour la ou chaque unité (40-50) fonctionnelle à activer.

12. Procédé suivant la revendication 9, 10 ou 11,
dans lequel on reproduit, sur la valeur (60) de confiance d'ensemble, la valeur de confiance de chaque unité (40-50) fonctionnelle activée conformément à un schéma (64) de reproduction donné à l'avance ou pouvant l'être.

13. Programme (32) d'ordinateur ayant des moyens de code de programme ou produit de programme d'ordinateur ayant des moyens de code de programme, qui sont mis en mémoire sur un support de données déchiffrable par ordinateur, afin d'exécuter tous les stades de chacune au choix des revendications 1 à 12, lorsque le programme (32) d'ordinateur ou le produit de programme d'ordinateur est exécuté dans une plateforme (16) de nuage.

14. Système (18) d'ordinateur comprenant une mémoire, dans laquelle est chargé un programme (32) d'ordinateur suivant la revendication 13 qui, lors du fonctionnement du système (18) d'ordinateur, est exécuté au moyen d'un processeur du système (18) d'ordinateur et qui, lors de l'exécution, provoque un traitement automatique d'identifiants (20, 22) de données conformément à un procédé suivant l'une des revendications 1 à 13.
